# NEUE EUROPÄISCHE PATENTSCHRIFT

(11) **EP 1 743 871 B2**
(45) Veröffentlichungstag und Bekanntmachung des Hinweises auf die Entscheidung über den Einspruch: **27.06.2012**
(45) Hinweis auf die Patenterteilung: 17.09.2008
(21) Anmeldenummer: 05015315.4
(22) Anmeldetag: 14.07.2005
(51) Int. Cl.: C02F 1/00, C02F 1/44, C02F 9/08, B01D 37/00, A47L 15/42

(54) **Prozesswasseraufbereitung in Mehrtankreinigungsautomaten**
Waste water treatment in automatic multi-tank cleaning devices
Traitement des effluents aqueux avec des automates de rinçage et de nettoyage dans plusieurs réservoirs

(43) Veröffentlichungstag der Anmeldung: 17.01.2007
(73) Patentinhaber: MEIKO Maschinenbau GmbH & Co. KG, 77652 Offenburg (DE)
(72) Erfinder: Streb, Michael Dipl.-Ing.(FH), 76473 Iffezheim (DE); Röderer, Thomas, 77749 Hohberg (DE); Gaus, Bruno Dipl.-Maschinenbau-Ing.., 77654 Offenburg (DE); Kupetz, Joachim Dipl.-Ing. (FH), 77791 Berghaupten (DE); Hils, Wendelin, 77836 Rheinmünster (DE)
(74) Vertreter: Hörschler, Wolfram Johannes

(56) Entgegenhaltungen:
- EP-A1- 0 560 025
- EP-A2- 1 741 674
- WO-A-96/15013
- WO-A-2005/028377
- DE-A1- 10 164 623
- DE-T2- 69 306 672
- GB-A- 2 350 357
- US-A- 4 812 237
- US-A- 5 868 937
- US-A1- 2002 008 065
- US-A1- 2005 016 910
- US-B1- 6 474 111
- GALLENT W ET AL: "ERFAHRUNGEN MIT EINEM GESCHLOSSENEN KREISLAUFSYSTEM ZUR HOCHDRUCK-WAESCHE VON MINERALOELVERSCHMUTZTEN FAHRZEUGTEILEN" KORRESPONDENZ ABWASSER, ABWASSERTECHNISCHE VEREINIGUNG, ST. AUGUSTIN, DE, Bd. 44, Nr. 5, Mai 1997 (1997-05), Seiten 897-904, XP000659267 ISSN: 0341-1540
- FRICK F-D ET AL: "MILIEUVRIENDELIJKE WASPLAATS VOOR FLITSTREIN" LAND + WATER/ MILIEUTECHNIEK, MILIEU PERS, OISTERWIJK, NL, Bd. 33, Nr. 12, 1. Dezember 1993 (1993-12-01), Seite 19,21,23, XP000430123 ISSN: 0926-8456

## Beschreibung

### Technisches Gebiet

Bei Prozesswasser benötigenden Maschinen, wie z. B. Reinigungsautomaten in Gestalt von Geschirrspülmaschinen, seien es Durchlaufgeschirrspülmaschinen, seien es Einkammer-Geschirrspülmaschinen, spielt die Aufbereitung des in solchen Reinigungsautomaten eingesetzten Prozesswassers aus ökonomischen Gründen und aus Umweltgründen eine zunehmend wichtiger werdende Rolle. Zum einen kann durch die Aufbereitung des Prozesswassers der Eintrag von Frischwasser reduziert werden, was die Betriebskosten eines derartigen Reinigungsautomaten senkt, zum anderen ist es aus Umweltgründen anzustreben, einen möglichst sparsamen Gebrauch vom knapper werdenden Gut Wasser zu machen.

### Stand der Technik

Bei Reinigungsautomaten, wie z. B. Geschirrspülmaschinen mit kontinuierlichem Transport von Spülgut, werden üblicherweise Tanks mit unterschiedlichen Funktionen, je nach Anzahl der in einem Durchlaufspülautomaten vorgesehenen Behandlungszonen, untergebracht. Durchlaufgeschirrspülmaschinen umfassen entweder eine Pumpenklarspülung oder eine Frischwasserklarspülung oder eine Kombination aus beiden, in der Frischwasser versprüht wird, was zum abschließenden Klarspülen des zu reinigenden Gutes eingesetzt wird. Dieses als Frischwasser zugeführte Wasser wird komplett oder zum Teil entgegen der Transportrichtung des zu reinigenden Gutes durch die Durchlaufgeschirrspülmaschine durch die einzelnen Behandlungszonen des Reinigungsautomaten geführt. Dabei findet eine Regeneration des in den der Frischwasserklarspülung vorhergehenden Tanks vorhandenen Prozesswassers statt, da das Prozesswasser aus der Frischwasserklarspülung sauberer ist als z.B. das Prozesswasser in der vorhergehenden Pumpenklarspülzone und dieses wiederum sauberer ist als das Prozesswasser in einer der Frischwasserklarspülung und der Pumpenklarspülung vorhergehenden Spülzone, was wiederum sauberer ist als das Prozesswasser in einer eventuell am Geschirrspülautomaten vorgesehenen Vorabräumzone.

In der Regel wird die Menge des über die Frischwasserzuleitung der Frischwasserklarspülzone zugeführten Wassers über die Abwasserleitung abgeführt. An Durchlaufgeschirrspülautomaten der in Rede stehenden Art lässt sich auch eine Umgehungsleitung realisieren, wenn in einzelnen Zonen eine geringere Regenerierwassermenge ausreichend ist.

Bei aus dem Stand der Technik bekannten Maschinen werden zur Filterung des Prozesswassers üblicherweise passive Systeme eingesetzt. In den den jeweiligen Behandlungszonen zugeordneten Tanks befinden sich im Prozesswasser Stromfilter, welche verhindern, dass Schmutzanteile mit einer bestimmten Größe in die Umwälzpumpen gelangen und die Düsen in den Spülsystemen der einzelnen Behandlungszonen verstopfen. Diese Filter sind üblicherweise als Siebe gestaltet und weisen Sieböffnungen auf, die einen Öffnungsquerschnitt in der Größenordnung zwischen 1 und 3 mm aufweisen. Während der Betriebszeit solcher Geschirrspülautomaten wird der eingebrachte Schmutz in den Sieben gesammelt. Der eingebrachte Schmutz, bei dem es sich vorwiegend um Speisereste handelt, löst sich mit der Zeit auf und gelangt dann in das in der jeweiligen Behandlungszone umgewälzte Prozesswasser. Durch den eingebrachten und sich mit zunehmender Betriebszeit auflösenden Schmutz ergibt sich zum einen eine starke Verschmutzung der Tanks und des in diesen umgewälzten Prozesswassers. Ferner macht die Verschmutzung des Prozesswassers einen starken Einsatz von Chemikalien sowie einen erhöhten Bedarf an Regenerationswasser, d.h. Frischwasser, erforderlich. Insgesamt führt der in das Prozesswasser eingebrachte und sich in diesem allmählich auflösende Schmutz zu einer insgesamt schlechteren Reinigungswirkung sowie zu einer stärkeren Verschleppung von Schmutz in andere Behandlungszonen innerhalb des Reinigungsautomaten.

Ferner sind aus dem Stand der Technik aktive Filter bekannt, mit denen Permanentverschmutzungen aus dem Prozesswasser ausgetragen werden. Durch diesen permanenten Schmutzaustrag wird die Qualität des Prozesswassers und damit die Qualität des Spülergebnisses verbessert und der Verbrauch an Reiniger reduziert.

Es sind Einrichtungen bekannt, bei denen im Prozesswasserkreislauf der Vorabräumung oder anderer Systeme aktive Filter eingesetzt werden. Dabei handelt es sich um Rotationsfilter, Bogenfilter oder ähnliche Systeme, mit etwa 0,5 mm Durchmesser aufweisenden Öffnungen. Mit derartigen Filtern wird erreicht, dass das Prozesswasser laufend gefiltert wird und kleine Schmutzreste ausgetragen werden.

Ferner sind Einrichtungen bekannt, bei denen mit Hydrozyklonen über die unterschiedlichen spezifischen Gewichte der Verschmutzungen in Bezug auf das Prozesswasser Permanentverschmutzungen aus dem Prozesswasser ausgetragen werden.

Schließlich sind Umkehrosmoseanlagen bekannt, welche Partikel in der Größenordnung bis zu 0,001 µm aus dem Frischwasser ausfiltern, so dass in diesem keine Mineralien mehr verbleiben, was die Qualität des Spülergebnisses erheblich verschlechtert.

Aus DE 101 64 623 A1 sind Einrichtungen bekannt, bei denen mit Mikrofiltration Umkehrosmose und UV-Oxidation eine Entkeimung und eine Entfernung von Schadstoffen in Textilindustrie- und Wäschereiabwässern erreicht wird. Bei dem aus DE 101 64 623 A1 vorgeschlagenen Verfahren handelt es sich um ein Kombinationsverfahren zur Entkeimung und zur Entfernung von Schadstoffen mit dem Zweck, das gereinigte Prozesswasser dem Wasch- bzw. Reinigungsprozess wieder zuzuführen. Schwach belastete textilindustrielle und Wäschereiabwässer werden durch Mikrofiltration, gekoppelt mit UV-Oxidation, wieder aufbereitet. Stark belastete textilindustrielle Abwässer werden durch eine Kombination von Fällung/Flockung gekoppe't mit einer UV-Oxidationsbehandlung und im Wege der Umkehrosmose wieder aufbereitet. Gemäß des aus DE 101 64 623 A1 vorgeschlagenen Verfahrens handelt es sich um ein Kombinationsverfahren, wobei die UV-Oxidation mit im Wesentlichen bekannten Verfahren gekoppelt wird und das Abwasser von Wäschereien bzw. aus textilindustriellen Anlagen über drei oder vier Stufen gereinigt wird.

### Darstellung der Erfindung

Der Erfindung liegt die Aufgabe zugrunde, das jeweilige Prozesswasser in mindestens einer Behandlungszone eines Reinigungsautomaten, insbesondere eines Durchlaufgeschirrspülautomaten, aufzubereiten und dem Reinigungsprozess wieder zuzuführen.

Erfindungsgemäß wird die Aufgabe durch die Merkmale des Anspruches 1 sowie die Merkmale des Anspruches 5 gelöst.

Erfindungsgemäß wird vorgeschlagen, das in den verschiedenen Behandlungszonen anfallende Prozesswasser des Reinigungsautomaten, insbesondere eines Durchlaufgeschirrspülautomaten, parallel zur Umwälzung des Prozesswassers oder des Klarspülwassers über eine Pumpe einen Teilstrom des Prozesswassers einer Behandlungszone zunächst über eine aktive Filterstufe und danach über weitere Filterstufen mit abnehmender Filtergröße eines Filterkreislaufes zu führen.

Es wird offenbart, dass bei einer Prozesswasseraufbereitung einer Einzelzone, in der ein sehr hoher Schmutzanfall auftritt, und bei größeren Durchlaufgeschirrspülautomaten an jeweils einer Zone parallel zur Umwälzung des Prozesswassers oder Klarspülwassers über eine Umwälzpumpe ein Teilstrom des Prozesswassers über einen aktiven Filter und anschließend über weitere Filterstufen abnehmender Filtergröße geführt werden.

Dabei ist ein dauerhafter Schmutzaustrag aus der entsprechenden einzelnen Behandlungszone eines mehrere Behandlungszonen aufweisenden Reinigungsautomaten, wie z. B. einer Durchlaufgeschirrspülmaschine, erzielbar. Dies lässt sich jeweils auf einzelne Behandlungszonen, auf mehrere hinsichtlich der Prozesswasserführung zusammengefasste Behandlungszonen oder auch unmittelbar auf die Frischwasserklarspülzone eines Durchlaufgeschirrspülautomaten anwenden.

Dabei ist der Vorteil erzielbar, dass die einzelnen Filter einer Filteranordnung (z. B. eine Filterkaskade) an das jeweils aufzubereitende Prozesswasser angepasst sein können und damit in dem jeweiligen Verfahrensschritt optimale Ergebnisse erzielt werden.

In einer Ausführungsvariante des der Erfindung zugrunde liegenden Gedankens können insbesondere bei kleinen Durchlaufgeschirrspülautomaten und geringem Schmutzanfall mehrere aufeinander folgende Zonen mit einer Prozesswasseraufbereitung versehen werden.

Gemäß dieser Ausführungsvariante wird ein Teilstrom des Prozesswassers, welches den ganzen Behandlungsprozess von der Frischwasserklarspülung ausgehend bis zu einer Spülzone bzw., falls vorhanden, zu einer Vorabräumzone durchläuft, komplett einer Filteranordnung zugeführt und dort über verschiedene Filterstufen mit abnehmender Filtergröße geführt und am Ende der Filteranordnung (z. B. Filterkaskade) wieder zur Frischwasserklarspülung zurückgeführt.

Diese Ausführungsvariante des der Erfindung zugrunde liegenden Gedankens hat insbesondere bei kleinen Durchlaufgeschirrspülmaschinen und bei Maschinen mit geringem Schmutzanfall den Vorteil, dass mit einer geringen Anzahl von Filterstufen ein Teilstrom des Prozesswassers aufbereitet werden kann und anschließend in den Prozesswasserkreislauf des Reinigungsautomaten, vorzugsweise in der Frischwasserklarspülzone einer Durchlaufgeschirrspülmaschine, wieder in den Prozess zurückgeführt wird.

Dabei ist entweder einer einzelnen Behandlungszone oder mehreren Behandlungszonen eine aktive Filteranordnung zugeordnet. Die gröbsten Verunreinigungen werden aus dem Prozesswasser in einer ersten aktiven Filterstufe herausgefiltert, der ein Feststoffaustrag zugeordnet ist. Der ersten, als Feststoffaustrag dienenden Filterstufe ist eine zweite Filterstufe nachgeordnet, in der eine Mikrofiltration des Prozesswassers erfolgt. An die zweite, der Mikrofiltration dienenden Filterstufe der Filteranordnung ist eine dritte Filterstufe zur Nanofiltration oder zur Umkehrosmose nachgeschaltet. Innerhalb der Filteranordnung können einzelne Teilströme des jeweils aufbereiteten Prozesswassers innerhalb eines Rückführkreislaufes der jeweils vorhergehenden Filterstufe der Filteranordnung zugeführt werden, wobei am Ende der letzten, d. h. der dritten Filterstufe das dort anfallende, aufbereitete Prozesswasser der Frischwasserklarspülzone wieder aufgegeben wird.

Erfindungsgemäß kann das in einem Durchlaufgeschirrspülautomaten beispielsweise anfallende Prozesswasser mehrfach verwendet werden, so dass der Bedarf von Regenerationswasser, welches in der Regel in der Frischwasserklarspülzone zugeführt wird, erheblich gesenkt werden kann. Ferner kann durch die erfindungsgemäß vorgeschlagene Lösung eine Verschmutzung der Tanks vermieden werden, so dass eine Beeinträchtigung der Hygiene ausgeschlossen ist.

Wird das erfindungsgemäß vorgeschlagene Verfahren an einem Reinigungsautomaten, wie z. B. einem Geschirrspülautomaten, eingesetzt, in dem eine geringer Verschmutzungsgrad auftritt, so liegt der Prozesswasseraustrag in der Behandlungszone des Geschirrspülautomaten, in die das Prozesswasser aus nachfolgenden Behandlungszonen, beispielsweise im Wege von Umgehungsleitungen oder Kaskadenüberläufen, zurückgeführt wird. Nach Durchlauf der mehrstufigen Filterkaskade wird das aufbereitete und gereinigte Prozesswasser in diesem Falle in das Spülsystem der Frischwasserklarspülung wieder in den Prozess zurückgeführt.

### Zeichnung

Anhand der Zeichnung wird die Erfindung nachstehend eingehender beschrieben.

### Es zeigt:

- Figur 1: einen Durchlaufgeschirrspülautomaten gemäß des Standes der Technik mit Kaskadenüberläufen,
- Figur 2: einen Durchlaufgeschirrspülautomaten gemäß des Standes der Technik mit einer eine oder mehrere Behandlungszonen überbrückenden Umgehungswassereinspeisung,
- Figur 3: in schematischer Weise ein Verfahren, angewendet auf eine einzelne Behandlungszone eines Durchlaufgeschirrspülautomaten und
- Figur 4: das erfindungsgemäß vorgeschlagene Verfahren zur Prozesswasseraufbereitung an mehreren zusammengeschalteten Behandlungszonen eines Durchlaufgeschirrspülautomaten.

### Ausführungsbeispiele

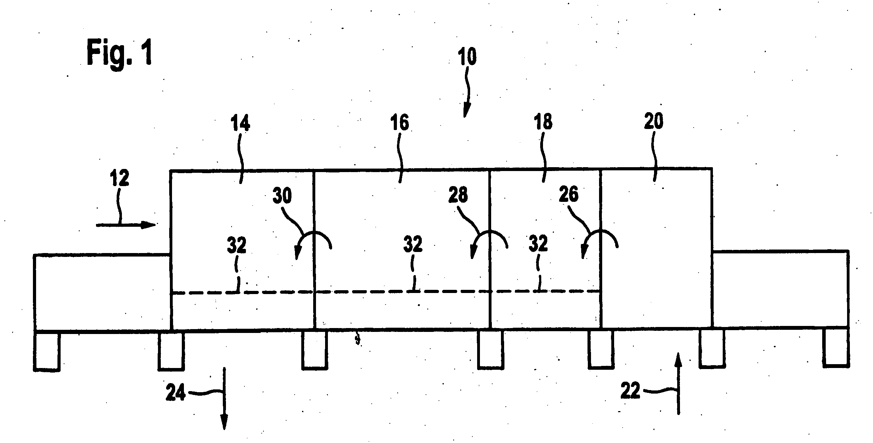

Figur 1 zeigt einen Reinigungsautomaten, insbesondere einen Geschirrspülautomaten gemäß des Standes der Technik.

Zu reinigendes Gut wird in Transportrichtung 12 durch den Reinigungsautomaten 10 gefördert, bei dem es sich insbesondere um eine Durchlaufgeschirrspülmaschine handelt. Der Reinigungsautomat 10 kann ein endloses Förderband aufweisen, auf welchem das zu reinigende Gut aufgenommen ist und entsprechend der Umlaufgeschwindigkeit des Förderbandes durch einzelne Behandlungszonen des Reinigungsautomaten 10 gefördert wird. Alternativ kann der Reinigungsautomat 10 auch als Korbtransportmaschine ausgestaltet sein, in der das jeweils zu reinigende Gut in Transportkörben aufgenommen ist, welche ebenfalls mittels Fördereinrichtungen in Transportrichtung 12 durch den Reinigungsautomaten transportiert werden. Durchlaufgeschirrspülmaschinen umfassen mehrere Behandlungszonen, so z. B. optional eine Vorabräumung, mindestens eine Spülzone, eine Pumpenklarspülzone und eine Frischwasserklarspülzone. Dieser ist im Regelfall eine Trocknungszone nachgeordnet, in welcher das in Transportrichtung 12 durch den Reinigungsautomaten 10 transportierte zu reinigende Gut nach Passage der Spülzonen und der Klarspülzone getrocknet wird.

Einer optional an einem Reinigungsautomaten 10 vorgesehene Vorabräumzone ist ein Tank 14 zugeordnet. An diesen schließt sich ein mindestens einer Spülzone zugeordneter Tank 16 an, an welchem sich - in Transportrichtung 12 des zu reinigenden Gutes gesehen - der Tank 18 einer Pumpenklarspülzone anschließt. Dieser wiederum schließt sich eine Frischwasserklarspülung 20 an, hinter der eine in Figur 1 nicht dargestellte Trocknungszone vorgesehen sein kann.

Eine Frischwasserzuleitung 22 mündet in die Frischwasserklarspülung 20, in der über dort vorgesehene, im Einzelnen nicht näher dargestellte Spülsysteme auf das gereinigte Gut Frischwasser aufgebracht wird, welches das zu reinigende Gut dort klarspült. Mit Bezugszeichen 26 ist ein Frischwasserüberlauf gekennzeichnet, über welchen Frischwasser in den Tank 18 der Pumpenklarspülung überströmt, welcher ein Tanksieb 32 enthält. Von dem Tank 18 der Pumpenklarspülung strömt im Rahmen eines ersten Kaskadenüberlaufes 28 Prozesswasser in den Tank 16 der mindestens einen Spülzone über, welcher mindestens ein weiteres Tanksieb 32 aufweist. Schließlich strömt im Rahmen eines zweiten Kaskadenüberlaufes 30 Prozesswasser vom Tank 16 der mindestens einen Spülzone in den Tank 14 der Vorabräumung über. Der Tank 14 der Vorabräumung umfasst ebenfalls ein Tanksieb 32. Dem Tank 14 der Vorabräumung ist eine Abwasserableitung 24 zugeordnet. Aus Kontinuitätsgründen ist die Menge des über die Abwasserleitung 24 abgeführten Prozesswassers gleich der Wassermenge, die über die Frischwasserzuleitung 22 der Frischwasserklarspülung 20 aufgegeben wird. In der Darstellung gemäß Figur 1 sind die Überläufe 26, 28, 30 für einen Frischwasservolumenstrom von 300 1/h dargestellt. Da die Überläufe 26, 28, 30 zunächst Frischwasser, anschließend Prozesswasser von der Frischwasserklarspülung 20 zum Tank 14 der Vorabräumung fördern, was entgegen der Transportrichtung 12 des zu reinigenden Gutes erfolgt, wird das in den Tanks 18 und 16 enthaltene Prozesswasser kontinuierlich verdünnt, bevor es an der Stelle, an der die schlechteste Prozesswasserqualität herrscht, im vorliegenden Falle im Tank 14 der Vorabräumung, über die Abwasserableitung 24 aus der Maschine transportiert wird. Neben einem hohen Wasserverbrauch haben die Maschinen gemäß der Darstellung in Figur 1 den Nachteil, dass das gesamte, über den Frischwasserüberlauf 26 in den Tank 18, 16, 14 geleitete Wasser mit einem Reiniger aufgeschärft werden muss. Dies bedeutet einen hohen Verbrauch an Reiniger.

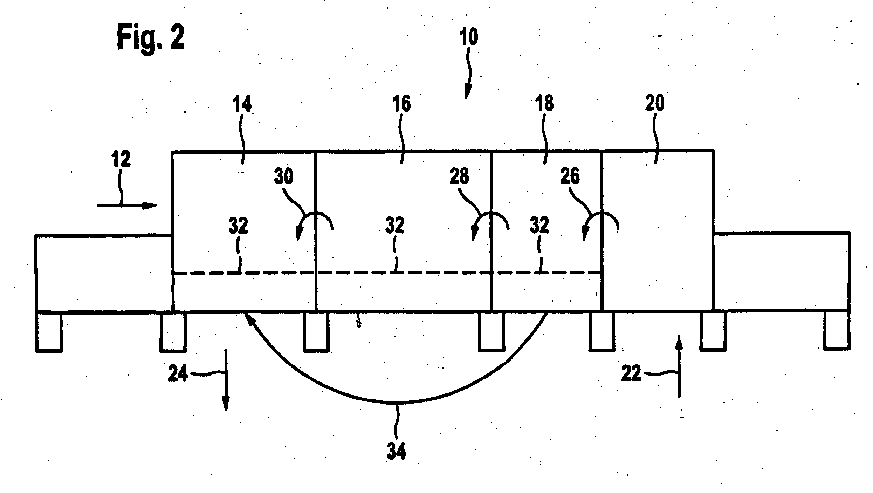

Figur 2 zeigt in schematischer Weise einen Reinigungsautomaten gemäß des Standes der Technik.

Dieser entspricht im Wesentlichen dem in Figur 1 beispielhaft dargestellten Durchlaufgeschirrspülautomaten mit dem Unterschied, dass sich zwischen der Frischwasserklarspülung 20 und dem Tank 14 der Vorabräumung eine Tankumgehungsleitung 34 erstreckt, über die, abgesehen von Frischwasserüberlauf 26, dem ersten Kaskadenüberlauf 28 und dem zweiten Kaskadenüberlauf 30 in den Tank 14 der Vorabräumzone, dem Tank 14 der Vorabräumung Frischwasser aus der Frischwasserklarspülung 20 direkt zugeleitet werden kann. Dieses Schaltschema mit der Tankumgehungsleitung 34 zur Führung des Prozesswassers bietet sich insbesondere dann an, wenn im Rahmen der Vorabräumung, d. h. im dort vorgesehenen Tank 14, eine sehr hohe Prozesswasserbelastung auftritt, d. h. wenn das Prozesswasser in dieser Zone sehr stark verschmutzt. Auch gemäß des in Figur 2 dargestellten, schematisch wiedergegebenen Geschirrspülautomaten befindet sich die Abwasserableitung 24 im Tank 14 der Vorabräumung. Gemäß dieser Lösung wird weniger Reiniger verbraucht, da eine geringere Wassermenge über den Frischwasserüberlauf 26 in die Tanks 14, 16 und 18 gelangt.

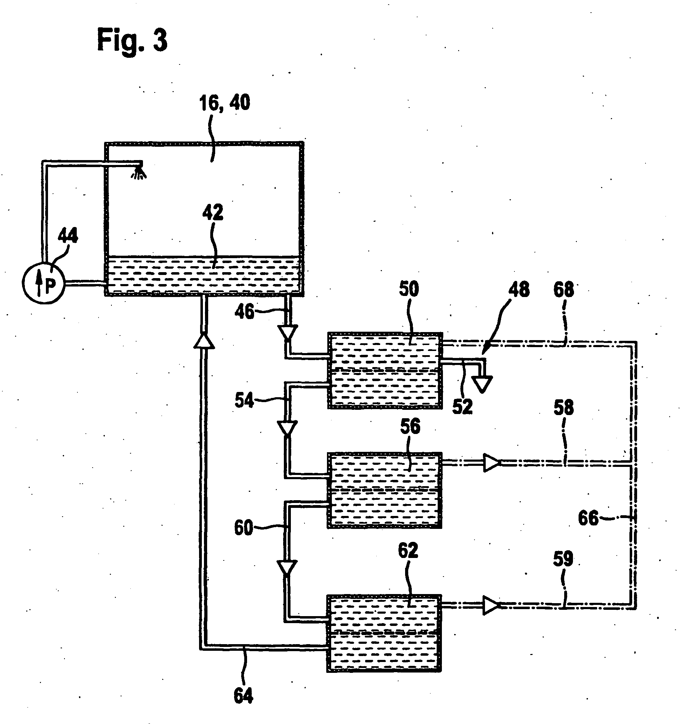

Figure 3 stellt keine Ausführungsform der Erfindung das Figur 3 ist in schematischer Weise ein Verfahren zur Prozesswasseraufbereitung an Reinigungsautomaten, wie z. B. einem Geschirrspülautomaten, an einer einzelnen Behandlungszone zu entnehmen.

In der Darstellung gemäß Figur 3 ist beispielhaft ein Tank 16, 40 einer Behandlungszone eines Durchlaufgeschirrspülautomaten z. B. einer Spülzone dargestellt. Im Tank 16, 40, der der mindestens einen Spülzone des Durchlaufgeschirrspülautomaten zugeordnet ist, befindet sich Prozesswasser 42. Das Prozesswasser 42 wird mittels einer dem Tank 16, 40 zugeordneten ersten Umwälzpumpe 44 kontinuierlich umgewälzt. Mittels der ersten Umwälzpumpe 44 wird jedoch nur ein Teil des Prozesswassers 42 umgewälzt und mittels eines Spülsystems wieder in die Behandlungszone zurückgeführt, während ein Teilstrom des Prozesswassers 42 des Tanks 16, 40 der mindestens einen Spülzone des Durchlaufgeschirrspülautomaten an einem Prozesswasseraustrag 46 aus dem Tank 16, 40 herausgeleitet wird. Das Prozesswasser 42 wird einer Filteranordnung 48 zugeführt, die im in Figur 3 dargestellten Ausführungsbeispiel dreistufig ausgebildet ist. Zunächst wird der Teilstrom des Prozesswassers 42 über den Prozesswasseraustrag 46 einer ersten Filterstufe 50 zugeführt. In der ersten Filterstufe (aktiver Filter) werden Feststoffe aus dem Prozesswasser 42 herausgefiltert, die an einem Feststoffaustrag 52 aus der ersten Filterstufe 50 entfernt werden.

Von der ersten Filterstufe 50, in welcher die Feststoffe ausgetragen werden, wird das Prozesswasser an einem Prozesswasseraustrag 54 der ersten Filterstufe 50 in eine der ersten Filterstufe 50 nachgeschaltete zweite Filterstufe 56 geleitet. In der zweiten Filterstufe 56 findet eine Mikrofiltration des Prozesswassers 42 statt. Das in der zweiten Filterstufe 56 weiter aufbereitete Prozesswasser 42 verlässt diese am Prozesswasseraustrag 60 der zweiten Filterstufe 56. Über einen ersten Rückführzweig 58 werden Stoffe, die die zweite Filterstufe 56 nicht passieren können, in eine Rückführung 68 zur ersten Filterstufe 50 geleitet.

Über den Prozesswasseraustrag 60 der zweiten Filterstufe 56 strömt das Prozesswasser 42 einer dritten Filterstufe 62 zu, in der entweder eine Nanofiltration oder eine Umkehrosmose stattfindet. Diese dritte Filterstufe 62 stellt die feinste Filterstufe der dreistufigen Filteranordnung 48 dar, in der das Prozesswasser 42 aufbereitet wird. Auch der dritten Filterstufe 62 ist ein Rückführzweig, in diesem Falle der zweite Rückführzweig 59, zugeordnet, der in eine Rückführkaskade 66 führt. Der dritten Filterstufe 62 ist der zweite Rückführzweig 59 zugeordnet, über den Stoffe, die die dritte Filterstufe 62 nicht zu passieren vermögen, über die Rückführkaskade 56 zur ersten Filterstufe 50 zurückgeleitet werden.

Das aus dem Tank 16, 40 mindestens einer Spülzone geförderte Prozesswasser 42 wird nach Passage der dreistufig ausgebildeten Filteranordnung 48 über eine Rückführung 64 wieder in den Tank 16, 40 der mindestens einen Spülzone zurückgeführt. Mit dem in Figur 3 dargestellten Leitungssystem für das aufzubereitende Prozesswasser 42 ist ein kontinuierlicher Austrag von Verschmutzungen aus dem Tank 16, 40 der mindestens einen Spülzone eines Reinigungsautomaten 10, wie z. B. eines Durchlaufgeschirrspülautomaten, erreichbar. Anstelle des in Figur 3 beispielhaft herausgegriffenen Tanks 16, 40 der mindestens einen Spülzone kann die mehrstufig ausgebildete Filteranordnung 48 auch einer Vorabräumzone sowie einer Pumpenklarspülzone parallelgeschaltet werden. Das in Zusammenhang mit Figur 3 dargestellte Verfahren hat den Vorteil, dass die jeweils in den Filterstufen 50, 56 und 62 eingesetzten Filter der Filteranordnung 48 an den jeweiligen, in der Behandlungszone ablaufenden Verfahrensschritt angepasst werden können. So stellt es z. B. einen Unterschied dar, ob die Filteranordnung 48 mit ihren Filterstufen 50, 56 und 62 an einer Vorabräumzone oder an einer einzelnen Spülzone oder an zusammengefassten Spülzonen eines Durchlaufgeschirrspülautomaten eingesetzt wird. Die Filteranordnung 48 kann wie in Figur 3 dargestellt, kaskadenförmig ausgestaltet sein, so dass die einzelnen Filterstufen 50, 56, 62 in Reihe hintereinandergeschaltet sind.

Eine Aufbereitung des Klarspülwassers in der Frischwasserklarspülung 20 kann ebenfalls vorgenommen werden. Dazu wird die Filteranordnung 48 der Frischwasserklarspülung 20 parallel geschaltet. Wird die Frischwasserklarspülung 20 im Umwälzbetriebmodus gefahren, so werden Reste, die in dem Prozesswasser der Frischwasserklarspülung 20 noch vorhanden sind, aus dem Prozesswasser entfernt, so z. B. Schmutzpartikel, die lose auf dem Spülgut lagern oder Reste von Reiniger.

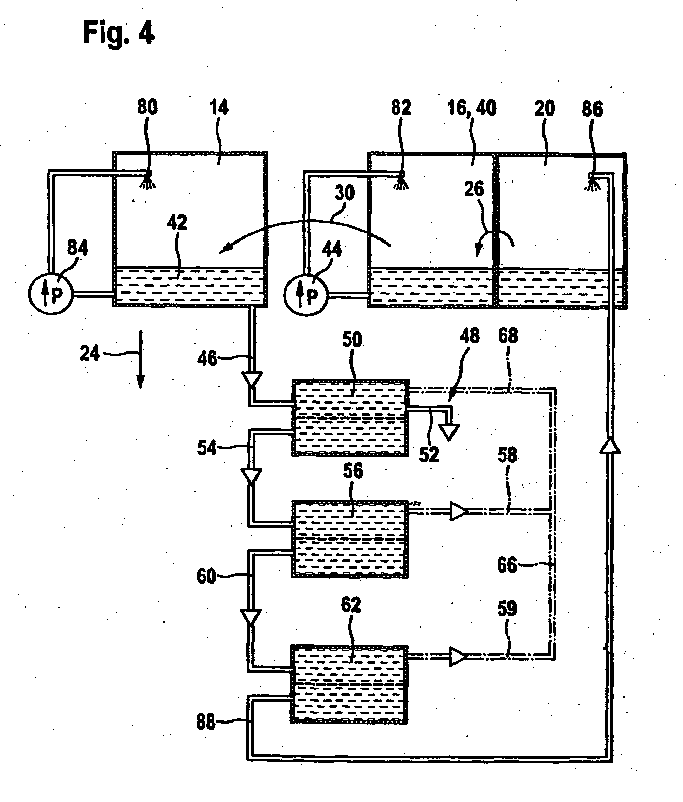

Der Darstellung gemäß Figur 4 ist ein Ausführungsbeispiel des erfindungsgemäß vorgeschlagenen Verfahrens zu entnehmen.

Die in Figur 4 dargestellte Prozesswasserführung eignet sich insbesondere zur Prozesswasseraufbereitung von aufeinander folgenden Behandlungszonen bei geringem Schmutzanfall und kleiner dimensionierten Reinigungsautomaten, wie z. B. Durchlaufgeschirrspülmaschinen.

Aus der Darstellung gemäß Figur 4 geht hervor, dass die Durchlaufgeschirrspülmaschine den Tank 14 einer Vorabräumzone aufweist, welchem eine zweite Umwälzpumpe 84 zugeordnet ist. In Transportrichtung 12 des zu reinigenden Gutes gesehen, schließt sich an den Tank 14 der Vorabräumzone der Tank 16, 40 mindestens einer Spülzone an. An diesen wiederum schließt sich die Frischwasserklarspülung 20 an. Das in Tank 14 der Vorabräumzone bevorratete Prozesswasser 42 wird mittels der zweiten Umwälzpumpe 84 einem Spülsystem 80, welches der Vorabräumzone zugeordnet ist, wieder zugeführt. Der sich an die Vorabräumzone anschließende Spültank 16, 40 der mindestens einen Spülzone nimmt ebenfalls Prozesswasser 42 auf, welches mittels der ersten Umwälzpumpe 44 umgewälzt wird. Dem Spültank 16, 40 der mindestens einen Spülzone ist die Frischwasserklarspülung 20 nachgeordnet. Diese wird im Wesentlichen vollständig mit aufbereitetem Prozesswasser 42 betrieben.

Von der Frischwasserklarspülung 20 wird Prozesswasser 42 über den Frischwasserüberlauf 26 in den Tank 16, 40 der mindestens einen Spülzone des Durchlaufgeschirrspülautomaten eingebracht. Von diesem strömt über den zweiten Kaskadenüberlauf 30 Prozesswasser 42 in den Tank 14 der Vorabräumzone über. Im Unterschied zum Ausführungsbeispiel gemäß Figur 3 sind gemäß des in Figur 4 dargestellten Ausführungsbeispieles mehrere Behandlungszonen eines Reinigungsautomaten 10 zusammengeschaltet. Aus dem Tank 14 der Vorabräumzone wird über den Prozesswasseraustrag 46 verunreinigtes Prozesswasser 42 der Filteranordnung 48 zugeführt. Die in der Darstellung gemäß Figur 4 drei Filterstufen umfassende Filteranordnung 48 umfasst die erste Filterstufe 50, in der Feststoffe aus dem Prozesswasser 42 ausgefiltert werden. Die ausgefilterten Feststoffe werden an einem Feststoffaustrag 52 aus der ersten Filterstufe 50 herausgeführt. Über den Prozesswasseraustrag 54 der ersten Filterstufe 50 wird das Prozesswasser 42 in die zweite Filterstufe 56 eingebracht, in der eine Mikrofiltration des Prozesswassers 42 stattfindet. Stoffe, die die zweite Filterstufe 56 nicht passieren können, werden über den ersten Rückführzweig 58 wieder der ersten Filterstufe 50 der mehrstufigen Filteranordnung zugeführt.

An dem Prozesswasseraustrag 60 der zweiten Filterstufe 56 verlässt das aufbereitete Prozesswasser die zweite Filterstufe 56 und strömt der dritten Filterstufe 62 zu. Die dritte Filterstufe 62 kann als Nanofiltrationsstufe oder als Umkehrosmosestufe beschaffen sein. Das aufbereitete, gereinigte Prozesswasser 42 verlässt die dritte Filterstufe 62 der Filteranordnung 48 über einen Wassereintrag 88, der das Prozesswasser 42 einem Spülsystem 86 der

Frischwasserklarspülung 20 zuführt. Über den Wassereintrag 88 wird das aufbereitete Prozesswasser 42 der Frischwasserklarspülung 20 zugeführt, der im Unterschied zu den aus dem Stand der Technik bekannten Ausführungsvarianten gemäß der Figuren 1 und 2 keine separate Frischwasserzuleitung 22 zugeordnet ist. Mit der in Figur 4 dargestellten Ausführungsvariante des der Erfindung zugrunde liegenden Gedankens wird das Prozesswasser 42, welches den ganzen Prozess durchlaufen hat, d. h. von der Frischwasserklarspülung 20 über den Frischwasserüberlauf 26 in den Tank 16, 40 der mindestens einen Spülzone, von dieser über den zweiten Kaskadenüberlauf 30 in den Tank 14 der Vorabräumzone, komplett abgegriffen und über die Filterkaskade 48 geführt. Die einzelnen Filterstufen 50, 56 und 62 der Filterkaskade 48 weisen eine abnehmende Filtergröße auf, so dass das die dritte Filterstufe 62, in der eine Nanofiltration oder eine Umkehrosmosebehandlung des Prozesswassers 42 stattfindet, verlassende aufbereitete Prozesswasser 42 in der Frischwasserklarspülung 20 zum Klarspülen des gereinigten Gutes eingesetzt werden kann.

Das in Figur 4 dargestellte Ausführungsbeispiel lässt sich insbesondere bei kleinen Durchlaufgeschirrspülmaschinen einsetzen sowie bei Reinigungsautomaten 10, bei denen ein geringer Schmutzanfall auftritt. Die in Figur 4 dargestellte Prozesswasseraufbereitung hat den Vorteil, dass mit einer überschaubaren Anzahl von Filterstufen 50, 56 und 62 das gesamte Prozesswasser 42 und nicht nur das Prozesswasser 42 einer Einzelzone (vgl. Figur 3) aufbereitet werden kann und anschließend in den Wasserkreislauf einer Durchlaufgeschirrspülmaschine oder eines anderen Reinigungsautomaten 10 zurückgeführt werden kann.

### Bezugszeichenliste

- 10: Reinigungsautomat (Geschirrspülmaschine)
- 12: Transportrichtung Reinigungsgut
- 14: Tank Vorabräumung
- 16: Tank Spülzone
- 18: Tank Pumpenklarspülung
- 20: Frischwasserklarspülung
- 22: Frischwasserzuleitung
- 24: Abwasserableitung
- 26: Frischwasserüberlauf
- 28: erster Kaskadenüberlauf
- 30: zweiter Kaskadenüberlauf
- 32: Tanksieb
- 34: Tankumgehungsleitung

- 40: Spültank
- 42: Prozesswasser
- 44: erste Umwälzpumpe
- 46: Prozesswasseraustrag
- 48: Filteranordnung (mehrstufig)
- 50: erste Filterstufe (Feststoffe)
- 52: Feststoffaustrag
- 54: Prozesswasseraustrag erste Filterstufe
- 56: zweite Filterstufe (Mikrofiltration)
- 58: erster Rückführzweig
- 59: zweiter Rückführzweig
- 60: Prozesswasseraustrag zweite Filterstufe
- 62: dritte Filterstufe (Nanofiltration/Umkehrosmose)
- 64: Rückführung Spültank
- 66: Rückführleitung
- 68: Rückführung in erste Filterstufe

- 80: Spülsystem Vorabräumung
- 82: Spülsystem Spülzone
- 84: zweite Umwälzpumpe Vorabräumung
- 86: Spülsystem Frischwasserklarspülung 20
- 88: Wassereintrag aus Filteranordnung 48 in Frischwasserklarspülung 20

## Patentansprüche

1. Verfahren zur Aufbereitung von Prozesswasser (42) in Reinigungsautomaten (10), in denen zu reinigendes Gut in Transportrichtung (12) durch mindestens zwei Behandlungszonen (14, 20) gefördert wird, mit nachfolgenden Verfahrensschritten:
a) Ein Teilstrom des Prozesswassers (42) wird einem Tank (14) einer ersten Behandlungszone (14) oder mehreren zusammengeschalteten Behandlungszonen entnommen,
b) das entnommene Prozesswasser (42) wird über eine erste aktive Filterstufe (50) mit Feststoffaustrag (52) und über zwei weitere Filterstufen (56, 62) geführt,
c) das entnommene und aufbereitete Prozesswasser (42) wird einem Spülsystem (86) einer der ersten Behandlungszone (14) oder den mehreren zusammengeschalteten Behandlungszonen in Transportrichtung (12) nachgeordneten Behandlungszone (20) zugeführt,
d) Prozesswasser der nachgeordneten Behandlungszone (20) strömt über einen Kaskadenüberlauf (30) zurück in die erste Behandlungszone (14) und/oder die mehreren zusammengeschalteten Behandlungszonen,
e) wobei die erste aktive Filterstufe verlassendes Prozesswasser (42) einer zweiten Filterstufe (56) zugeführt wird, in der eine Mikrofiltration des Prozesswassers (42) erfolgt und
f) die zweite Filterstufe (56) verlassendes Prozesswasser (42) einer dritten Filterstufe (62) zugeführt wird, in der eine Nano-Filtration und/oder eine Umkehrosmose des Teilstroms des Prozesswassers (42) erfolgt.

2. Verfahren gemäß Anspruch 1, **dadurch gekennzeichnet, dass** das entnommene und aufbereitete Prozesswasser (42) nach Passage der dritten Filterstufe (62) einer Frischwasserklarspülung (20) zugeführt wird.

3. Verfahren gemäß Anspruch 1, **dadurch gekennzeichnet, dass** das entnommene und aufbereitete Prozesswasser (42) nach Passage der dritten Filterstufe (62) einer Pumpenklarspülung (18) zugeführt wird.

4. Verfahren gemäß der Ansprüche 1, **dadurch gekennzeichnet, dass** in der zweiten Filterstufe (56) und/oder der dritten Filterstufe (62) eine Rückführung (58, 59) eines Teilstroms des Prozesswassers (42) in die erste aktive Filterstufe (50) über eine Rückführkaskade (66) erfolgt.

5. Reinigungsautomat zur Durchführung des Verfahrens gemäß einem oder mehrerer der Ansprüche 1 bis 4, in welchem zu reinigendes Gut in Transportrichtung (12) durch mindestens zwei Behandlungszonen gefördert wird, **dadurch gekennzeichnet, dass** einer ersten Behandlungszone oder mehreren zusammengeschalteten Bchandlungszonen des zu reinigenden Gutes eine mindestens zweistufige Filteranordnung (48) zugeordnet ist, die eine erste aktive Filterstufe (50) mit einem Feststoffaustrag (52) enthält, wobei eine Rückführung (88) für entnommenes und aufbereitetes Prozesswasser (42) in eine der ersten Behandlungszone (14) oder den mehreren zusammengeschalteten Behandlungszonen in Transportrichtung nachgeordnete Behandlungszone (20) vorgesehen ist sowie Kaskadenüberlauf (30), welcher ausgestaltet ist, dass Prozesswasser aus der nachgeordneten Behandlungszone (20) zurück in die erste Behandlungszone (14) und/oder die mehreren zusammengeschalteten Behandlungszonen strömen kann, wobei der ersten, als Feststoffaustrag dienenden Filterstufe (50) eine zweite Filterstufe (56) nachgeordnet ist, in der eine Mikrofiltration des Teilstroms des Prozesswassers (42) erfolgt und die Filteranordnung (48) eine dritte Filterstufe (62) aufweist, welcher der aus der zweiten Filterstufe (56) abströmende Teilstrom des Prozesswassers (42) zugeführt wird.

6. Reinigungsautomat gemäß Anspruch 5, **dadurch gekennzeichnet, dass** die zweite Filterstufe (56) und die dritte Filterstufe (62) jeweils eine Rückführung (58, 59) aufweisen, über welche ein nicht über Prozesswasserausträge (54, 60) die Filterstufen (56, 62) verlassener Teilstrom des Prozesswassers (42) die Filterstufen (56, 62) verlässt und vorhergehenden Filterstufen der Filteranordnung (48) zugeleitet wird.

7. Reinigungsautomat gemäß Anspruch 6, **dadurch gekennzeichnet, dass** das die dritte Filterstufe (62) verlassende, aufbereitete Prozesswasser (42) über einen Wassereintrag (88) einem Spülsystem (86) einer Frischwasserklarspülung (20) zugeführt wird.

## Claims

1. Method of treating process water (42) in automatic cleaning units (10) in which material to be cleaned is transported in the transport direction (12) through at least two treatment zones (14, 20) having the following method steps:
a) a substream of the process water (42) is taken off from a tank (14) of a first treatment zone (14) or a plurality of interconnected treatment zones,
b) the process water (42) which is taken off is conducted via a first active filter stage (50) having a solids discharge (52) and via two further filter stages (56, 62),
c) the process water (42) which is taken off and treated is fed to a flush system (86) of a treatment zone (20) which is arranged downstream in the transport direction (12) of the first treatment zone (14) or the plurality of interconnected treatment zones,
d) process water of the downstream treatment zone (20) flows via a cascade overflow (30) back into the first treatment zone (14) and/or the plurality of interconnected treatment zones,
e) wherein process water (42) which is leaving the first active filter stage is fed to a second filter stage (56) in which a microfiltration of the process water (42) proceeds, and
f) process water (42) which is leaving the second filter stage (56) is fed to a third filter stage (62) in which a nanofiltration and/or a reverse osmosis of the substream of the process water (42) proceeds.

2. Method according to Claim 1, **characterized in that** the process water (42) which is taken off and treated, after passage through the third filter stage (62) is fed to a fresh water rinse (20).

3. Method according to Claim 1, **characterized in that** the process water (42) which is taken off and treated, after passage through the third filter stage (62), is fed to a pump rinse (18).

4. Method according to Claim 1, **characterized in that**, in the second filter stage (56) and/or the third filter stage (62), a substream of the process water (42) is recirculated ((58, 59) via a recirculation cascade (66) into the first active filter stage (50).

5. Automatic cleaning unit for carrying out the method according to one or more of Claims 1 to 4, in which material to be cleaned is transported in the transport direction (12) through at least two treatment zones, **characterized in that** an at least two-stage filter arrangement (48) is assigned to a first treatment zone or a plurality of interconnected treatment zones of the material to be cleaned, which filter arrangement contains a first active filter stage (50) having a solids outlet (52), wherein a recirculation (88) for process water (42) which is taken off and treated into a treatment zone (20) which is arranged downstream in the transport direction of the first treatment zone (14) or the plurality of interconnected treatment zones is provided, and also cascade overflow (30), which is designed in such a manner that process water from the downstream treatment zone (20) can flow back into the first treatment zone (14) and/or the plurality of interconnected treatment zones, there being provided, downstream of the first filter stage (50), which acts as a solids outlet, a second filter stage (56), in which the substream of the process water (42) undergoes microfiltration, and the filter arrangement (48) has a third filter stage (62) to which is fed the substream of the process water (42) which flows out of the second filter stage (56).

6. Automatic cleaning unit according to Claim 5, **characterized in that** the second filter stage (56) and the third filter stage (62) each have a recirculation (58, 59) via which a substream of the process water (42), which substream does not leave the filter stages (56, 62) via process water outlets (54, 60), leaves the filter stages (56, 62) and is passed to preceding filter stages of the filter arrangement (48).

7. Automatic cleaning unit according to Claim 6, **characterized in that** the treated process water (42) which leaves the third filter stage (62) is fed to a flush system (86) of a fresh water rinse (20) via a water inlet (88).

## Revendications

1. Procédé de traitement des effluents aqueux (42) dans des automates de nettoyage (10), dans lesquels le produit à épurer est transporté dans le sens (12) de transport à travers au moins deux zones de traitement (14, 20), en passant par les étapes suivantes du procédé :
a) une partie des effluents aqueux (42) est prélevée dans un réservoir (14) d'une première zone de traitement (14) ou de plusieurs zones de traitement raccordées ensemble,
b) les effluents aqueux prélevés (42) sont conduits via une première cellule active (50) de filtration avec une évacuation (52) des matières solides et via deux autres cellules (56, 62) de filtration,
c) les effluents aqueux prélevés et traités (42) sont amenés à un système de lavage (86) d'une zone de traitement (20) placée en aval de la première zone de traitement (14) ou des plusieurs zones de traitement raccordées ensemble dans le sens (12) du transport,
d) les effluents aqueux de la zone de traitement (20) placée en aval refluent par un déversement en cascade (30) dans la première zone de traitement (14) et/ou dans les nombreuses zones de traitement raccordées ensemble,
e) les effluents aqueux (42) quittant la première cellule active de filtration étant amenés à une deuxième cellule (56) de filtration, dans laquelle se produit une microfiltration des effluents aqueux (42), et
f) les effluents aqueux (42) quittant la deuxième cellule (56) de filtration étant amenés à une troisième cellule (62) de filtration, dans laquelle se produit une nanofiltration et/ou une osmose inverse de la partie des effluents aqueux (42).

2. Procédé selon la revendication 1, **caractérisé en ce que** les effluents aqueux prélevés et traités (42) sont amenés à un lavage de clarification à l'eau épurée (20) après passage dans la troisième cellule (62) de filtration.

3. Procédé selon la revendication 1, **caractérisé en ce que** les effluents aqueux prélevés et traités (42) sont amenés à un lavage par pompage (18) après passage dans la troisième cellule (62) de filtration.

4. Procédé selon la revendication 1, **caractérisé en ce qu'**il se produit dans la deuxième cellule (56) de filtration et/ou dans la troisième cellule (62) de filtration un recyclage (58, 59) d'une partie des effluents aqueux (42) dans la première cellule active (50) de filtration via une cascade de recyclage (66).

5. Automate d'épuration pour la mise en oeuvre du procédé selon une ou plusieurs des revendications 1 à 4, dans lequel le produit à épurer est transporté dans le sens (12) de transport à travers au moins deux zones de traitement, **caractérisé en ce qu'**à une première zone de traitement ou à plusieurs zones de traitement du produit à épurer raccordées ensemble est associé un agencement de filtration (48) à au moins deux cellules et qui contient une première cellule active (50) de filtration avec une évacuation des matières solides (52), un recyclage (88) des effluents aqueux prélevés et traités (42) dans une zone de traitement (20) placée à l'aval de la première zone de traitement (14) ou des nombreuses zones de traitement raccordées ensemble dans le sens du transport étant prévu ainsi qu'un déversement en cascade (30) qui est disposé de sorte que les effluents aqueux puissent refluer de la zone de traitement (20) placée en aval jusque dans la première zone de traitement (14) et/ou dans les nombreuses zones de traitement raccordées ensemble, une deuxième cellule (56) de filtration étant placée en aval de la première cellule (50) de filtration qui sert d'évacuation des matières solides, dans laquelle deuxième cellule (56) de filtration se produit une microfiltration de la partie des effluents aqueux (42) et l'agencement de filtration (48) comportant une troisième cellule (62) de filtration, à laquelle est amenée la partie des effluents aqueux (42) s'écoulant de la deuxième cellule (56) de filtration.

6. Automate d'épuration selon la revendication 5, **caractérisé en ce que** la deuxième cellule (56) de filtration et la troisième cellule de filtration (62) comportent chacune un recyclage (58, 59), via lequel une partie des effluents aqueux (42) ne quittant pas les cellules (56, 62) de filtration via les évacuations des effluents aqueux (54, 60) quitte les cellules (56, 62) de filtration et est amenée aux cellules de filtration de l'agencement de filtration (48) situées en amont.

7. Automate d'épuration selon la revendication 6, **caractérisé en ce que** les effluents aqueux traités (42) quittant la troisième cellule (62) de filtration sont amenés via un entraînement d'eau (88) à un système de lavage (86) d'un lavage de clarification à l'eau épurée (20).
